# EUROPEAN PATENT SPECIFICATION

(11) **EP 1 488 122 B1**
(45) Date of publication and mention of the grant of the patent: **05.03.2014**
(21) Application number: 03715956.3
(22) Date of filing: 29.01.2003
(51) Int. Cl.: F16D 3/76

(54) **FLEXIBLE COUPLINGS**
FLEXIBLE KUPPLUNGEN
RACCORDS SOUPLES

(30) Priority: 26.03.2002 US 107285
(43) Date of publication of application: 22.12.2004
(73) Proprietor: ATR Sales, Inc., Santa Ana, CA 92707 (US)
(72) Inventor: HAUCK, Anthony, Lee, Santa Ana, CA 92706 (US)
(74) Representative: Viering, Jentschura & Partner Patent- und Rechtsanwälte
(86) International application number: PCT/US2003/002592
(87) International publication number: WO 2003/083320

(56) References cited:
- BE-A- 511 458
- DE-C1- 373 687
- GB-A- 245 847
- GB-A- 781 395
- US-A- 1 017 819
- US-A- 2 564 826
- US-A- 3 817 057

## Description

### Background of the Invention

### 1. Field of the Invention

The invention set forth in this specification pertains to new and improved flexible couplings and, more particularly, to such couplings having advantageous features of both shear and compression style couplings.

### 2. Description of Related Art

Flexible couplings have long been used for the purpose of transmitting rotation from one shaft to another. Such couplings are normally used in order to accommodate comparatively minor shaft alignment problems such as are occasionally encountered because of manufacturing or assembly errors. Because of the fact that these devices are widely u sed and h ave b een known and used for many years, many different types of flexible couplings have been proposed, built, and used.

Certain particular flexible couplings have been manufactured in the past so as to include two hubs or hub elements which are adapted to be connected to the shafts joined by the coupling. These hubs are each provided with extending lugs, teeth, or ribs serving as holding means so as to be engaged by corresponding projections on a band-like or belt-like motion transmitting means in order to cause the hubs to rotate in synchronism as one of the shafts is rotated. The bands or belts used in these prior couplings have been flexible, somewhat resilient belts capable of being wrapped around the hubs so that the projections on them engage the holding means on the hubs.

A metal band or ring is typically used to retain the belt in position wrapped around the hubs. The interior of the band is shaped and dimensioned so that the band may be slid axially relative to the hubs during the assembly and disassembly of the coupling so that the band fits over the belt when the coupling is assembled so as to conform closely to the exterior of the belt.

Some coupling designs have provided a pair of oppositely-disposed axial grooves in the outer surface of the belt and a pair of oppositely-disposed pins in the inner surface of the metal band. The pins are located so as to slide into the grooves as the metal band is installed along a line parallel to the axis of rotation of the hubs. The pins thus position the band and provide a degree of retention. However, if the shafts are grossly misaligned, the metal band will "walk-off" the belt, causing the coupling to come apart. The axial grooves have also been provided with an enlarged central portion such that the pins must be forced through the entrance of the axial groove and then "pop" into place in the central portion to give a tactile indication that the metal band is properly positioned with respect to the flexible belt.

In US 6024644A and US 5738585A and 08/695,675, we have disclosed improved "lock-on" apparatus for improving the retention of the aforementioned metal retainer bands. This improved apparatus employs an axial groove for initially receiving a pin located o n the underside of the metal retainer band and a circumferential groove opening into the axial groove and into which the retainer band pin may be rotated. In the embodiments illustrated in the referenced applications, the axial groove is bisected by a radial line which also bisects one of the lobes or projections of the flexible belt. The circumferential groove is relatively short, typically having been selected to be two times the width of the retainer ring pin. In practice, such apparatus must contend with vibrations, harmonics, rotation, misalignment and various stresses and forces on the component parts.

The prior art document DE 373687 teaches a coupling for coupling two shafts. A first hub is connected to a first shaft and a second hub is connected to a second shaft. The first hub comprises a hollow cylinder part that is provided along its inner curved surface with internal teeth provided along its inner curved surface. The second hub has a cylindrical outer surface that is encompassed within the inner curved surface of the first hub. The cylindrical outer surface of the second hub is provided with external teeth. A flexible insert that may be made from rubber is provided with teeth that engage the respective internal and external teeth of the first and second hubs and is capable of transmitting a torque between the first and second hubs.

It is an object of the present invention to enhance a shaft coupling, particularly such as to avoid subjecting the shafts to any axial forces.

This is achieved by a coupling according to claim 1. Advantageous further embodiments are described in the dependent claims 2-8.

### Brief Description of the Drawings

An illustrative and presently preferred embodiment of the invention will now be described in detail in conjunction with the drawings of which:
FIG. 1 is an exploded perspective of a coupling according to a preferred embodiment;

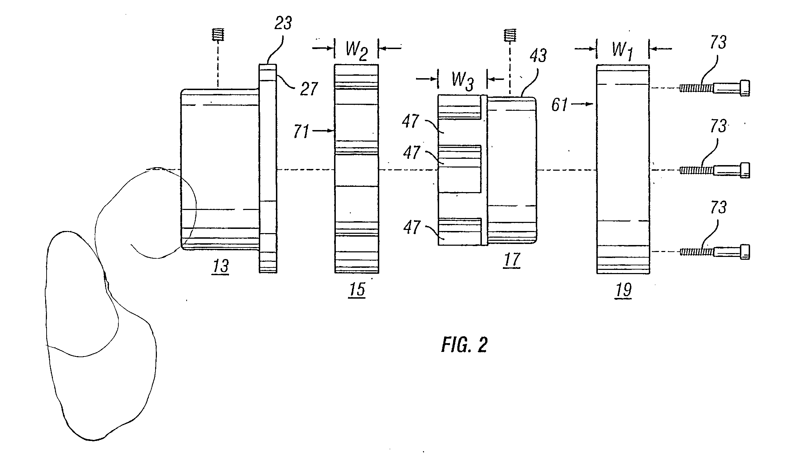

FIG. 2 is a side view of the coupling of FIG. 1;
FIG. 3 is a perspective end view illustrating a hub, insert and retainer components in assembled relation;
FIG. 4 is a perspective view of the coupling in the assembled state;
FIG. 5 is a side cross sectional view of an embodiment according to the invention;
FIG. 6 is a side cross sectional view of an embodiment according to the invention; and

### Detailed Description of Preferred Embodiments

The coupling of the illustrative embodiment includes a first hub 13, a flexible insert 15, a second hub 17 and a retainer member 19. The first hub 13 includes an interior bore, 22, a first cylindrical segment 21 and a mounting flange 23 having a circular outer edge 25. The face 27 of the flange 23 has a number of mounting holes 29 therein, each of which lies equally spaced on a circle of lesser diameter than that of the outer edge 25. Conventional fastening devices such as "screw" 28 may be used to secure the hubs to respective shafts.

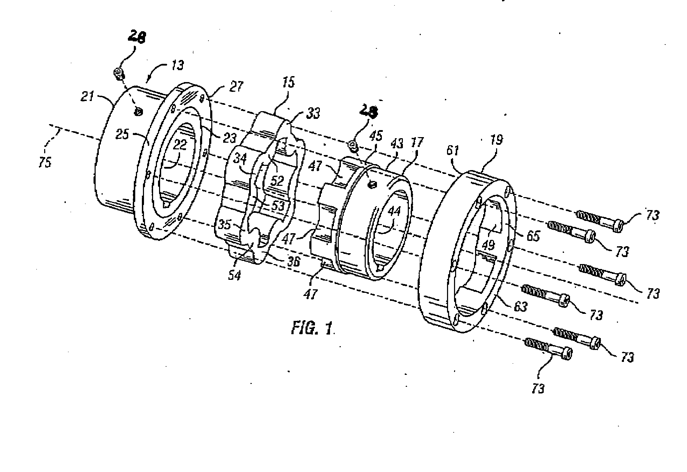

The insert 15 is preferably fabricated from a flexible material such as, for example, a suitable urethane, and is preferably split so as to facilitate "wraparound" installation. The outer surface 31 of the insert 15 features a number of equally spaced exterior lobes 33, 34, 35, 36, 37, 38 projecting therefrom. The lobes, e.g., 33, are formed about equally spaced radii extending from the center of the insert 15. The interior surface of the insert 15 features a number of interiorly projecting lobes 52, 53, 54, 55, 56, 57, which, in the embodiment of FIG. 1, alternate with the exterior lobes 33, 34, etc. In other words, as one proceeds about the circumference of the insert 15 one encounters a first exterior lobe 33, then a n interior lobe 52, then a second exterior lobe 3 4, t hen a second interior lobe 53, etc.

The second hub 17 includes a cylindrical segment 43 and an insert-mounting segment or portion 45. The insert-mounting portion 45 includes a number of wells or receptacles 47 which are shaped and dimensioned to mate snugly with the interior lobes, e.g., 52, 53, of the insert 15. The hub 17 is preferably machined as a unitary part from a single piece of metal stock, but of course could be constructed in various other fashions. The second hub 17 further includes an interior bore 44, typically of circular cross section dimensioned to receive a shaft of cooperating apparatus.

The interior 49 of the retainer 19 is specially contoured, shaped and dimensioned to receive and snugly mate with the exterior lobes, e.g., 33, 34, of the insert 15 when the coupling is in the assembled state. The retainer 19 has a first face 61 (FIG. 1), which receives and passes the insert 15 into mating position with the exterior lobes 33, 34, etc., and a second face 63 (FIG. 1) which includes a depending edge or flange portion 65, which prevents the insert 15 from passing through the retainer 19, i.e., holds the insert 15 in a position wherein the insert 15 is preferably encased by the retainer 19.

In the embodiment illustrated, the width "w₁" of the retainer and the width "w₂" of the insert are selected such that the face 71 of the insert 15 lies flush with the edge of the first face 61 of the retainer 19, such that both the insert's face 71 and the edge 61 lie adjacent the flange face 27 in the assembled state. Thus, in assembly, the retainer 19 "captures" the insert 15 and is then attached to the first hub 13 via a number of fastening devices such as threaded bolts 73.

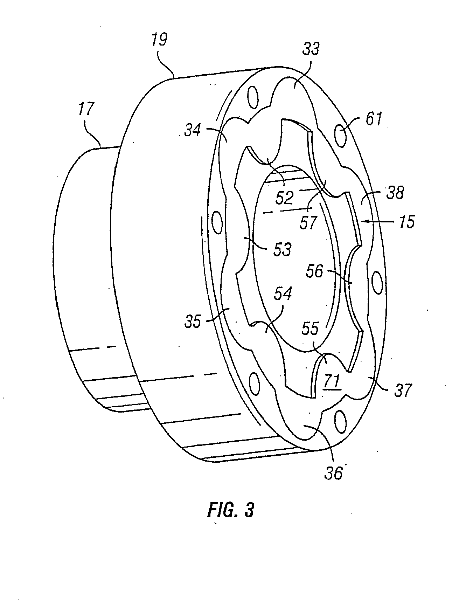

As shown, for example, in FIG. 3, the width W₃ of the insert mating portion 45 of the second hub 17 is preferably selected such that its interior face 147 terminates slightly short of the face of the insert 15. Thus, the second hub 17 does not protrude through the insert 15 or extend to a point where it might contact the flange face 27 of the first hub 13.

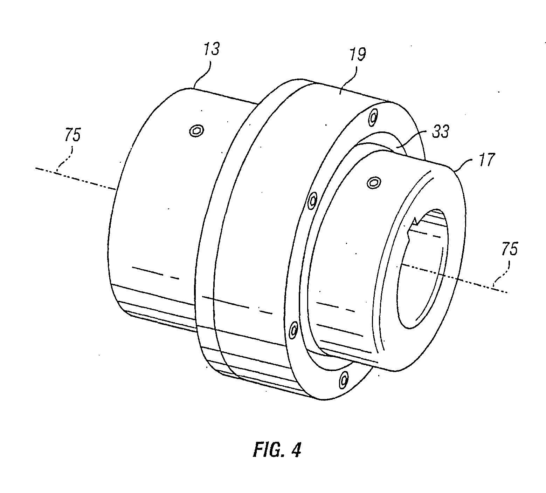

In operation in the assembled state (FIG. 4), the insert is snugly encased and transmits torque and absorbs minor misalignment without exerting axial thrusts on the cooperating shafts to which the first and second hubs 13, 17 are respectively attached. Thus, the insert 15 does not tend to exert forces on the hubs 13, 17 tending to move them parallel to the central axis 75 of rotation in typical applications. Such forces may cause a hub to move, for example, 15 thousandths of an inch, which is undesirable or unacceptable in certain applications.

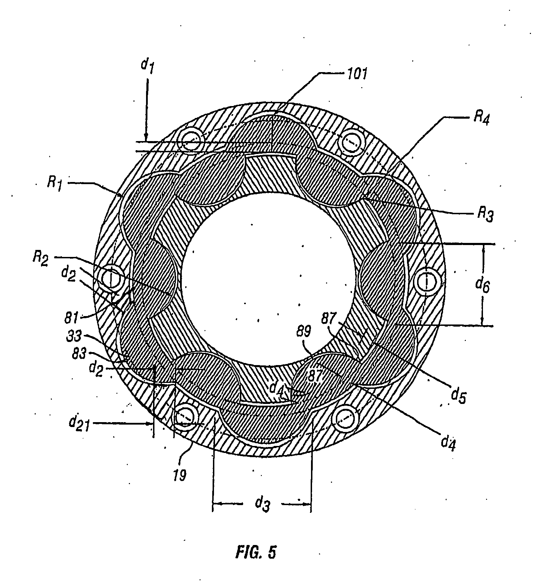

FIGS. 5-7 illustrate various design considerations according to a preferred embodiment of the invention. According to this illustrated embodiment, the insert 15 exhibits a constant shear section width d₁. Each exterior lobe, e.g., 33, has respective flat sides 81 having a selected length d₂ and a central portion 83 between the two flat sides 81. The central portion 83 has a circular outer contour of radius R₁. Adjacent surfaces of the drive ring 19 are dimensioned to conform to the shape of the exterior lobe, e.g., 53, for example, in incorporating flat sections 85 adjacent the flat sides 81 of the outer lobes, the flat sections 85 having a length d₂₁. The width d₃ of each exterior lobe is the same.

Similar to the exterior lobes, each interior lobe, e.g., 52, has respective flat sides 87 of equal width d₄ and a central circular portion 89 connecting those sides 87 and having a radius R₂. The corner to corner width d₆ of cach interior lobe, e.g., 52, is the same. Finally, the insert includes a split 101 in one of the outside lobes 33-38 to provide for wraparound installation.

The dimensioning of the various widths and radii illustrated in FIG. 5, of course, varies, for example, with application and size of a particular coupling. An illustrative dimensioning in inches for a coupling of the size under consideration is as follows:
R₁ = 1.875
R₂ = 1.625
d₂=.730
d₂₁ = .725
d₃=3.978
d₄ = .423
d₅ =.510
d₆ = 3.325
R₃ = 100
R₄=.100
R₄ and R₃ are respectively inside corner lobe radii and outside corner hub wing radii implemented to resist tearing and cutting.

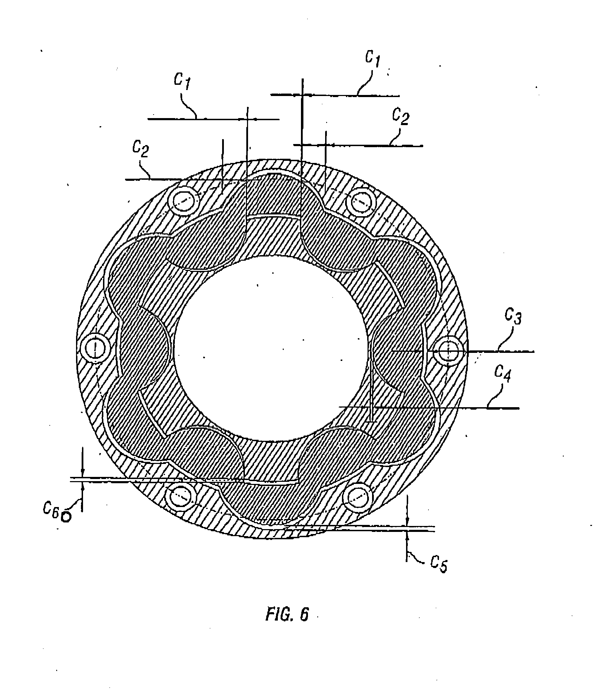

FIG. 6 illustrates various clearances of interest with respect to a coupling according to the embodiment of FIGS. 5-7. The clearance C₁ is the clearance between the flat sides 87 of the interior lobes, e.g., 52, and the adjacent surfaces of the insert 15. The clearances c₂ are the clearances between the flat side portions 81 of the exterior lobes, e.g., 33, and the adjacent flat portions of the insert 15. The clearances c₅ and c₆ are the clearances between the diameter of the exterior lobes, e.g., 33, and the insert 15, while c₃ and c₄ are clearances between the diameter of the interior lobes, e.g., 52, and the insert 15. Illustrative values in inches for these clearances for a coupling, in which the outside diameter of the ring is about 14.72 inches, are:
c₁ =.030
c₂ =.035
c₃ = .060
c₄ = .060
c₅ = .060
c₆ = .060

Such couplings have the further advantage of combining advantageous aspects of both shear and compression couplings. In particular, the coupling operates normally in compression, which prevents exertion of axial thrusts, but can still shear to protect equipment in the event of lock-up or overload, etc. An example is the case of shredding apparatus used to shred recycled material. Occasionally, the material will include prohibited foreign obj ects which can lock the shredder. In such case the insert of a coupling according to the disclosed design will shear rather than break the associated equipment.

While the present invention has been described above in terms of specific embodiments, it is to be understood that the invention is not limited to the disclosed embodiments. The role of "driving" and "driver hubs" may be reversed and dimensioning adapted to particular sizes and conditions.

## Claims

1. A coupling comprising:
a first hub (13) that is adapted to be secured to a first shaft by fastening devices (28) and has an inner face (27);
a flexible insert (15) having a plurality of exterior lobes (e.g. 33, 34) and a plurality of interior lobes (e.g. 52, 53); and
a second hub (17) that is adapted to be secured to a second shaft by fastening devices and has a portion (45) thereof shaped and dimensioned to snugly receive and mate with said plurality of interior lobes (e.g. 52, 53) so that in operation in the assembled state the insert is snugly encased and transmits torque and absorbs minor misalignment without exerting axial thrusts on the first and second hubs (13,17) and consequently on the respective cooperating shafts when these are secured to the first and second hubs (13,17),
**characterized by**
a retainer (19) attached to said first hub (13) by fastening devices (73), said retainer (19) having an interior (49) shaped and dimensioned to snugly receive said plurality of exterior lobes (e.g. 33, 34), the retainer (19) having a first face (61) which receives and passes the insert (15) into mating position therewith and a second face (63) having a depending flange portion (65), which prevents the insert (15) from passing through the retainer (19), a face (71) of the insert (15) lying flush with an edge of the first face (61) of the retainer (19), and adjacent the inner face (27) of the first hub (13).

2. The coupling of claim 1 wherein said first hub (13) has a cylindrical segment (21) and wherein said inner face (27) comprises the face of a flange (23) formed on said cylindrical segment (21).

3. The coupling of claim 1 wherein said exterior and interior lobes (e.g. 52,53; 33,34) each have a rounded contour symmetrically formed about respective radii of said flexible insert (15).

4. The coupling of claim 1 wherein at least one exterior lobe (e.g. 33,34) comprises a first flat face (81) and a circular portion (83).

5. The coupling of claim 1 wherein at least one interior lobe (e.g.52, 53) comprises a first flat face (87) and a circular portion (89).

6. The coupling of claim 4 wherein said at least one exterior lobe (e.g. 33, 34) further comprises a second flat face (81) and wherein said circular portion (83)lies between the first flat face (81) and second flat face (81).

7. The coupling of claim 6 wherein said first and second flat faces (81) are of equal length.

8. The coupling of claim 5 wherein said at least one interior lobe comprises a second flat face (87) and said circular portion (89) lies between said first and second flat face (87).

## Patentansprüche

1. Eine Kupplung, aufweisend:
eine erste Nabe (13), die angepasst ist, um mittels Befestigungsvorrichtungen (28) an einer ersten Welle befestigt zu sein, und die eine Innenseite (27) hat,
einen flexiblen Einsatz (15), der eine Mehrzahl von äußeren Nocken (z. B. 33, 34) und eine Mehrzahl von inneren Nocken (z. B. 52, 53) aufweist, und
eine zweite Nabe (17), die angepasst ist, um mittels Befestigungsvorrichtungen an einer zweiten Welle befestigt zu sein und einen Abschnitt (45) davon aufweist, der geformt und bemessen ist, um die Mehrzahl von inneren Nocken (z. B. 52, 53) fest aufzunehmen und mit diesen ineinanderzugreifen, so dass der Einsatz im Betrieb im Montagezustand fest umgeben ist und Drehmoment überträgt und eine geringfügige Fehlausrichtung auffängt, ohne Axialschübe auf die erste und die zweite Nabe (13, 17) und folglich auf die jeweiligen zusammenwirkenden Wellen auszuüben, wenn diese an der ersten und der zweiten Nabe (13, 17) befestigt sind,
**gekennzeichnet durch**
eine Halterung (19), die mittels Befestigungsvorrichtungen (73) an der ersten Nabe (13) angebracht ist, wobei die Halterung (19) einen Innenraum (49) aufweist, der geformt und bemessen ist, um die Mehrzahl von äußeren Nocken (z. B. 33, 34) fest aufzunehmen, wobei die Halterung (19) aufweist: eine erste Fläche (61), die den Einsatz (15) aufnimmt und diesen in eine Eingriffsposition damit bringt, und eine zweite Fläche (63) mit einem abhängigen Flanschabschnitt (65), die verhindert, dass der Einsatz (15) **durch** die Halterung (19) hindurchpassiert, wobei eine Fläche (71) des Einsatzes (15) mit einem Rand der ersten Fläche (61) der Halterung (19) bündig und benachbart zu der Innenseite (27) der ersten Nabe (13) ist.

2. Die Kupplung gemäß Anspruch 1, wobei die erste Nabe (13) ein zylinderförmiges Segment (21) hat, und wobei die Innenseite (27) die Fläche eines Flansches (23) aufweist, der an dem zylinderförmigen Segment (21) ausgebildet ist.

3. Die Kupplung gemäß Anspruch 1, wobei die äußeren und die inneren Nocken (z. B. 52, 53; 33, 34) jeweils einen abgerundeten Umriss haben, der um jeweilige Radien des flexiblen Einsatzes (15) herum symmetrisch ausgebildet ist.

4. Die Kupplung gemäß Anspruch 1, wobei mindestens ein äußerer Nocken (z. B. 33, 34) eine erste glatte Fläche (81) und einen kreisförmigen Abschnitt (83) aufweist.

5. Die Kupplung gemäß Anspruch 1, wobei mindestens ein innerer Nocken (z. B. 52, 53) eine erste glatte Fläche (87) und einen kreisförmigen Abschnitt (89) aufweist.

6. Die Kupplung gemäß Anspruch 4, wobei der mindestens eine äußere Nocken (z. B. 33, 34) ferner eine zweite glatte Fläche (81) aufweist, und wobei der kreisförmige Abschnitt (83) zwischen der ersten glatten Fläche (81) und der zweiten glatten Fläche (81) liegt.

7. Die Kupplung gemäß Anspruch 6, wobei die erste und die zweite glatte Fläche (81) gleich lang sind.

8. Die Kupplung gemäß Anspruch 5, wobei der mindestens eine innere Nocken eine zweite glatte Fläche (87) aufweist, und wobei der kreisförmige Abschnitt (89) zwischen der ersten und der zweiten glatten Fläche (87) liegt.

## Revendications

1. Un accouplement, comportant:
un premier moyeu (13) adapté à être attaché à un premier arbre par des dispositifs de fixation (28) et qui a une face interne (27),
un insert souple (15) ayant une pluralité de cames extérieures (p. ex. 33, 34) et une pluralité de cames intérieures (p, ex. 52, 53), et
un second moyeu (17) adapté à être attaché à un second arbre par des dispositifs de fixation, une partie (45) duquel étant formée et dimensionnée à accueillir solidement et à s'engrener avec ladite pluralité de cames intérieures (p. ex. 52, 53), de sorte qu'en fonctionnement en état monté l'insert est solidement enfermé et transmet un couple de rotation et absorbe un léger désalignement sans exercer des poussées axiales sur le premier et second moyeux (13, 17) et par conséquent sur les arbres coopérant respectifs, lorsque ceux-ci sont attachés aux premier et second moyeux (13, 17),
**caractérisé par**
un dispositif de retenue (19) attaché audit premier moyeu (13) par des dispositifs de fixation (73), ledit dispositif de retenue (19) ayant un intérieur (49) formé et dimensionné à accueillir solidement ladite pluralité de cames extérieures (p. ex. 33, 34), le dispositif de retenue (19) ayant une première face (61) accueillant et passant l'insert (15) dans une position d'engrènement avec celles-ci, et une seconde face (63) ayant une partie de bride (65) dépendante, empêchant que l'insert (15) passe par le dispositif de retenue (19), une face (71) de l'insert (15) formant une surface plane avec un rebord de la première face (61) du dispositif de retenue (19) et avoisinant la face interne (27) du premier moyeu (13).

2. L'accouplement selon la revendication 1, dans lequel ledit premier moyeu (13) a un segment cylindrique (21), et dans lequel ladite face interne (27) comporte la face d'une bride (23) formée sur le segment cylindrique (21).

3. L'accouplement selon la revendication 1, dans lequel les cames extérieures et intérieures (p. ex. 52, 53 ; 33, 34) ont chacune un contour arrondi formé symétriquement autour de rayons respectifs dudit insert souple (15).

4. L'accouplement selon la revendication 1, dans lequel au moins une came extérieure (p. ex. 33, 34) comporte une première face plane (81) et une partie circulaire (83).

5. L'accouplement selon la revendication 1, dans lequel au moins une came intérieure (p. ex. 52, 53) comporte une première face plane (87) et une partie circulaire (89).

6. L'accouplement selon la revendication 4, dans lequel ladite au moins une came extérieure (p. ex. 33, 34) comporte en outre une seconde face plane (81), et dans lequel la partie circulaire (83) est située entre la première face plane (81) et la seconde face plane (81).

7. L'accouplement selon la revendication 6, dans lequel lesdites première et seconde faces planes (81) sont de même longueur.

8. L'accouplement selon la revendication 5, dans lequel ladite au moins une came intérieure comporte une seconde face plane (87) et ladite partie circulaire (89) et située entre lesdites première et seconde faces planes (87).
